# EUROPEAN PATENT SPECIFICATION

(11) **EP 2 306 012 B1**
(45) Date of publication and mention of the grant of the patent: **24.01.2018**
(21) Application number: 10177315.8
(22) Date of filing: 17.09.2010
(51) Int. Cl.: F04B 1/04, F04B 1/053, F04B 39/12, F04B 53/00, F04B 53/14, F04B 53/16, B60T 8/40

(54) **Plunger pump**
Kolbenpumpe
Pompe à piston

(30) Priority: 17.09.2009 JP 2009215243
(43) Date of publication of application: 06.04.2011
(73) Proprietor: Nissin Kogyo Co., Ltd., Tomi-city Nagano, 389-0514 (JP)
(72) Inventor: Nakamura, Motoyasu, Kanagawa 222-8580 (JP); Kodama, Takuro, Nagano, 389-0514 (JP)
(74) Representative: Hoffmann Eitle

(56) References cited:
- GB-A- 2 102 082
- GB-A- 2 253 882
- JP-A- 2009 203 885
- US-A- 5 984 651

## Description

### BACKGROUND

### 1. Field of the Invention

The present invention relates to a plunger pump.

### 2. Description of the Related Art

There has been provided a plunger pump in which a driving member such as an eccentric cum reciprocally moves a plunger (also called a piston) within a pump chamber in the axial direction to thereby eject fluid, sucked into the pump chamber from a suction port, from an ejection port of the pump chamber.

As an example of such the plunger pump, there is one which is arranged to include a pump body having a cylinder hole, a lid member for sealing the one end of the cylinder hole, a plunger slidably attached within the cylinder hole, and a coil spring which is disposed within a pump chamber and presses the plunger on a driving member side, wherein one end of the plunger defines the pump chamber between the one end and the lid member, the other end of the plunger abuts against the driving member, and one end of the coil spring is received by the flat surface of the lid member, as disclosed in JP-A-11-43034.

According to this plunger pump, the coil spring disposed within the pump chamber is formed in a manner that the outer diameter thereof coincides with the inner diameter of the pump chamber so that the extensible coil spring is guided along the inner peripheral surface of the pump chamber. There is another configuration that a projection portion formed at the lid member is inserted into the opening portion of the coil spring to thereby guide the coil spring by the projection portion.

According to the aforesaid plunger pump of the related art, since the coil spring contacts with the inner peripheral surface of the pump chamber or the projection portion of the lid member, swarf may be generated within the pump chamber due to a fact that the extensible coil spring rubs against the inner circumferential surface of the pump chamber or the projection portion of the lid member.

A plunger pump according to the preamble of claim 1 is known from JP-A-2009 203885.

US-A-5, 984, 651, GB-A-2 253 882 and GB-A-2 102 082 also form part of the prior art.

### SUMMARY

The invention intends to solve the aforesaid problem and an object of the invention is to provide a plunger pump which can guide an extensible coil spring while the coil spring is prevented from expanding and contracting within a pump chamber from being rubbed with other member and also can improve a performance of assembling to a cylinder hole.

According to an aspect of the invention, there is provided a plunger pump including the features of claim 1.

According to this configuration, since the one end of the coil spring is received and guided by the surface (spherical surface) of the lid member, the shaft center of the coil spring and the center of the lid member are automatically adjusted so as to be aligned and so the coil spring is disposed at the center portion of the pump chamber. Thus, the extensible coil spring can be guided while the extensible coil spring is prevented from being rubbed against other member.

Further, since the lid member is configured in a simple shape, that is, a sphere, the assembling direction thereof to the cylinder hole is not limited. Thus, the assembling property of the lid member to the cylinder hole can be improved.

The lid member may be pressed into the cylinder hole, a retaining portion for the lid member may be formed at the one end side of the cylinder hole with respect to a center of the lid member, and the retaining portion may be formed by plastically deforming an inner circumferential surface of the cylinder hole.

According to this configuration, the lid member as the sphere can be surely fixed to the cylinder hole to thereby seal the one end of the cylinder hole.

The plunger may be provided with a receiving portion configured to receive the other end of the coil spring, and the receiving portion may have a receiving surface where the other end of the coil spring abuts and a projection portion which is inserted into an opening portion at the other end of the coil spring.

The plunger may be provided with a receiving portion configured to receive the other end of the coil spring, and the receiving portion may have a spherical surface where the other end of the coil spring abuts.

According to these configurations, since the receiving portion of the plunger receives the other end of the coil spring, the both ends of the coil spring can be disposed at the center portion of the pump chamber. Thus, the extensible coil spring can be surely prevented from being rubbed against other member.

Further, when the receiving portion has the spherical surface, the receiving portion of the plunger can be processed easily.

According to the invention, the plunger pump may include a plurality of the coil springs arranged in a radial direction within the pump chamber, the plurality of the coil springs pressing the plunger toward the driving member side, wherein one end of each of the plurality of the coil springs is received by a surface of the lid member.

Even in the case where the lid member is configured to receive the one ends of the plurality of the coil springs by the surface thereof, since the one ends of the plurality of the coil springs are commonly received by the surface (spherical surface) of the lid member, the shaft center of each of the coil springs and the center of the lid member are automatically adjusted so as to be aligned and so the coil springs are disposed at the center portion of the pump chamber.

Further, since the pressing force for pressing the plunger to the driving member side is shared by the respective coil springs, the length and the diameter of each of the coil springs can be made small, so that the plunger pump can be miniaturized.

Furthermore, since the length and the diameter of each of the coil springs can be made small, the capacity within the pump chamber can be reduced, whereby the ejection efficiency of the plunger pump can be enhanced.

According to the plunger pump of the invention, the shaft center of the coil spring and the center of the lid member are automatically adjusted so as to be aligned and so the coil spring is disposed at the center portion of the pump chamber. Thus, the extensible coil spring can be guided while the extensible coil spring is prevented from being rubbed against other member.

Further, since the assembling direction of the lid member to the cylinder hole is not limited, the assembling property of the lid member to the cylinder hole be improved.

### BRIEF DESCRIPTION OF THE DRAWING

The present invention will become more fully understood from the detailed description given hereinbelow and the accompanying drawing which is given by way of illustration only, and thus is not limitative of the present invention and wherein:
Fig. 1 is a side sectional view showing a plunger pump according to an embodiment;
Fig. 2 is an exploded perspective view showing the plunger pump according to the embodiment;
Figs. 3A and 3B are diagrams showing a procedure of attaching a lid member to a cylinder hole according to the embodiment, in which Fig. 3A is a side sectional view showing a state where the lid member is pressed into the cylinder hole, and Fig. 3B is a side sectional view showing a state where the lid member is locked by the inner peripheral surface of the cylinder hole;
Fig. 4 is a side sectional view showing a plunger pump according to another embodiment, in which a seal member is disposed outside of a plunger;

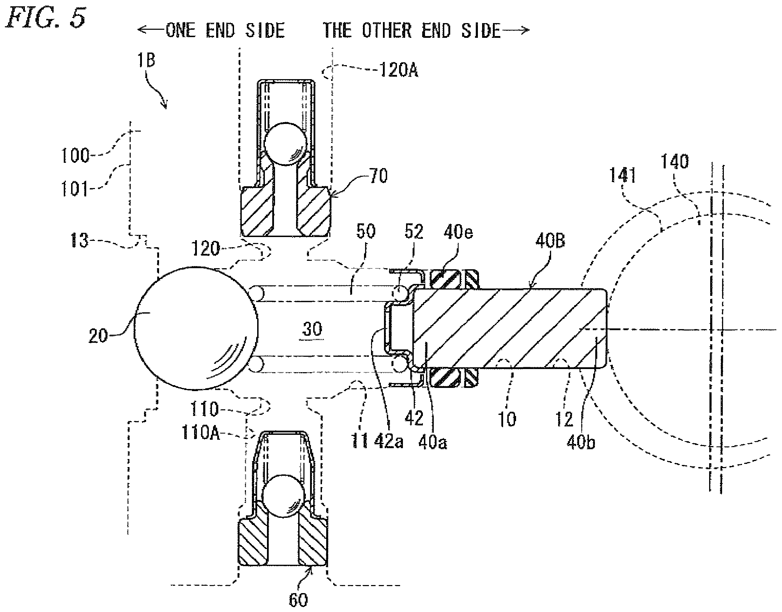

Fig. 5 is a side sectional view showing a plunger pump according to still another embodiment, in which a receiving portion is attached to a plunger;
Fig. 6 is a side sectional view showing a plunger pump according to still another embodiment, in which a receiving portion has a spherical shape; and
Fig. 7 is a side sectional view showing a plunger pump according to still another embodiment, in which a plurality of coil springs are employed.

### DETAILED DESCRIPTION OF THE INVENTION

Next, an embodiment of the invention will be explained in detail with reference to accompanying drawings.

The embodiment will be explained, as an example, as to a plunger pump which is used as a hydraulic pressure generating device for a brake fluid pressure control apparatus to be mounted on a vehicle such as an automobile.

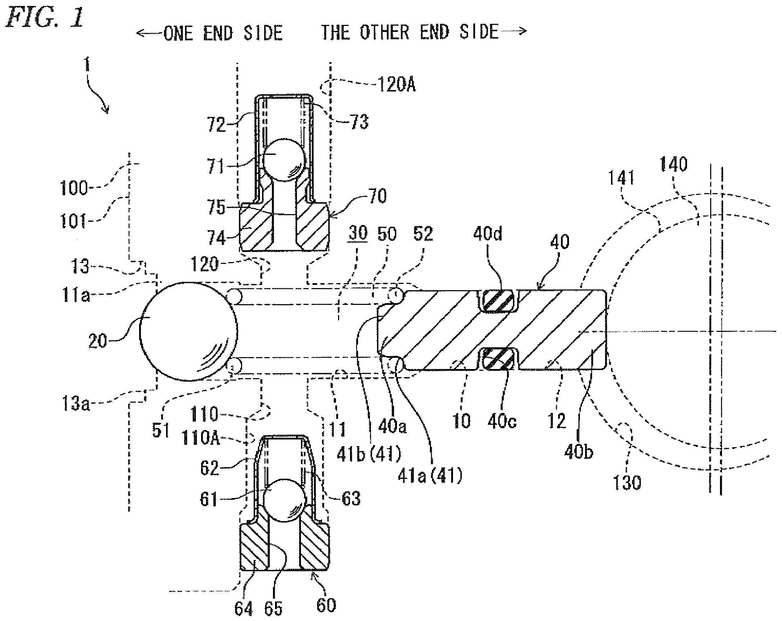

In the following explanation, one end side and the other end side correspond to the left and right side in Fig. 1, respectively.

As shown in Fig. 1, a plunger pump 1 includes a pump body 100 having a cylinder hole 10, a lid member 20 for sealing the one end of the cylinder hole 10, a plunger 40 slidably attached within the cylinder hole 10, and a coil spring 50 which is disposed within a pump chamber 30 and presses the plunger 40 on an eccentric cum 140 side, wherein one end of the plunger defines the pump chamber 30 between the one end and the lid member 20 and the other end of the plunger abuts against the eccentric cum 140 ("driving member" in claims). The plunger pump 1 is arranged in a manner that when the plunger 40 reciprocally moves in an axial direction within the cylinder 10, brake fluid sucked into the pump chamber 30 from a suction port 110 is discharged from the ejection port 120 of the pump chamber 30.

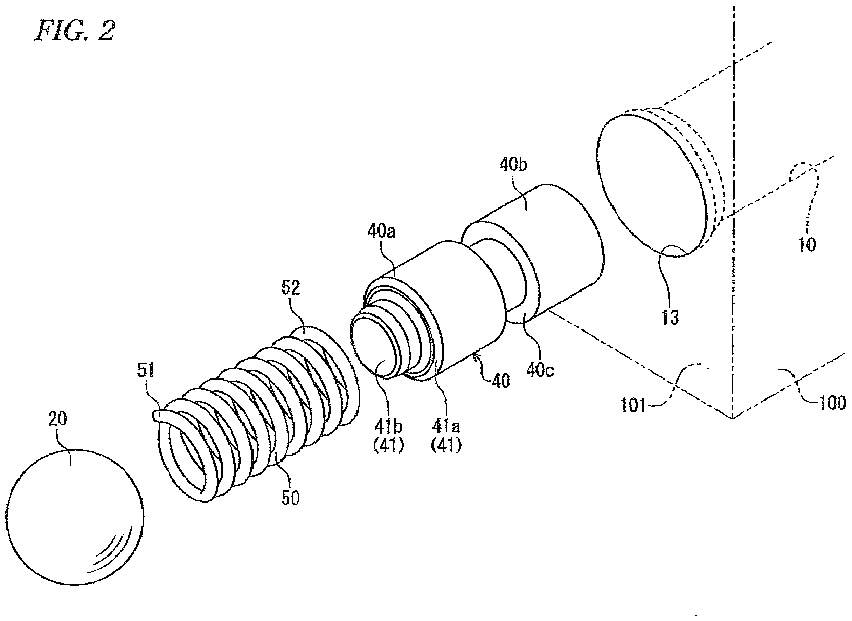

The pump body 100 is a metal component of an almost rectangular parallelepiped shape to be mounted on a vehicle. A plurality of oil passages (not shown) are formed within the pump body, and the pump body is provided with the cylinder hole 10 of a circular sectional shape into which the plunger pump 1 is inserted (see Fig. 2).

The cylinder hole 10 has a circular sectional shape. The one end of the cylinder hole is opened at the one surface 101 of the pump body 100 and the other end thereof communicates with a bearing hole 130. That is, the cylinder hole 10 extends in the right direction from the one surface 101 of the pump body 100 toward the center portion thereof in Fig. 1.

A stepped large diameter portion 11 of a cylindrical shape is formed at a portion on the one end side (the one surface 101 side of the pump body 100) with respect to the center portion in the axis line direction of the cylinder hole 10. A small diameter portion of a cylindrical shape is formed at a portion on the other end side (the bearing hole 130 side) with respect to the center portion in the axis line direction of the cylinder hole 10. An opening portion 13 on the one end side of the cylinder hole 10 is formed to have a diameter larger than that of the large diameter portion 11 and is provided with an annular bottom portion 13a. A guide surface 13b formed in a tapered shape is formed at the inner peripheral portion of the bottom portion 13a.

The lid member 20 of a metal spherical body is fit into the large diameter portion 11 of the cylinder hole 10 (see Fig. 2). The lid member 20 seals the one end of the cylinder hole 10. The outer diameter of the lid member 20 is formed to be slightly larger than the inner diameter of the large diameter portion 11 of the cylinder hole 10. The lid member 20 is pressed into the large diameter portion 11 of the cylinder hole 10. Further, a retaining portion 11a for the lid member 20 is formed on the one end side of the cylinder hole 10 with respect to the center of the lid member 20. The retaining portion 11a is formed by plastically deforming the inner peripheral surface (hole wall portion) of the cylinder hole 10.

The explanation will be made as to a procedure of attaching the lid member 20 at the large diameter portion 11 of the cylinder hole 10.

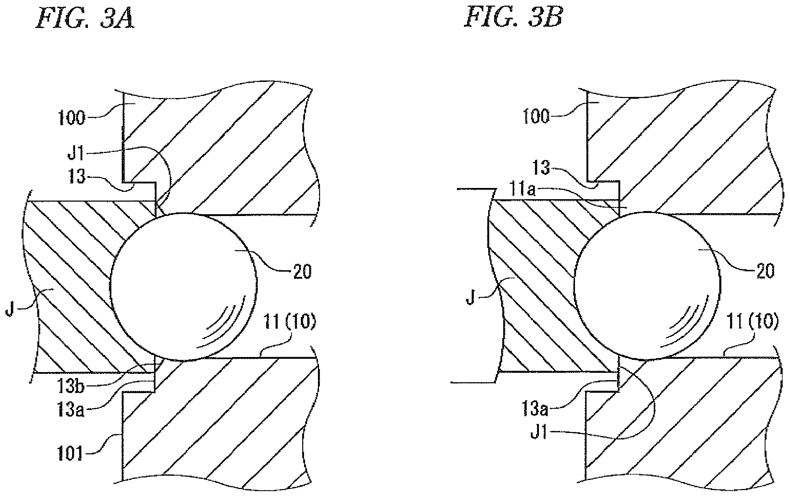

First, as shown in Fig. 3A, the lid member 20 is pushed and pressed into the large diameter portion 11 from the opening portion 13 on the one end side of the cylinder hole 10 by using a jig J, whereby the lid member 20 is fit within the one end of the large diameter portion 11. In this case, since the lid member 20 is pushed into the large diameter portion 11 while being guided along the guide surface 13b formed at the inner peripheral portion of the bottom portion 13a, the lid member 20 is pressed into the large diameter portion 11 in a state that the center of the lid member 20 and the center of the large diameter portion 11 are aligned.

Then, as shown in Fig. 3B, while further pressing the portion 20 into the other end side of the large diameter portion 11, the bottom portion 13a is crushed from the opening portion 13 side by using the outer circumferential portion J1 of the jig J so that the bottom portion 13a of the opening portion 13 protrudes toward the inner direction of the large diameter portion 11, whereby the lid member 20 is locked by the inner peripheral surface of the large diameter portion 11 to thereby form the retaining portion 11a of the lid member 20 on the one end side of the cylinder hole 10 with respect to the center of the lid member 20.

As shown in Fig. 1, an eccentric cam 140 provided at the output shaft of an electric motor (not shows) attached to the pump body 100 is housed within the bearing hole 130. The center position of the eccentric cam 140 is eccentric with respect to the shaft center of the output shaft which is disposed coaxially as to the bearing hole 130. The eccentric cam 140 rotates around the shaft center of the output shaft in accordance with the rotation of the output shaft of the eccentric cam 140.

The plunger 40 is a metal component having a circular sectional shape to be inserted into the small diameter portion 12 of the cylinder hole 10 (see Fig. 2). The one end 40a of the plunger protrudes into the large diameter portion 11 and the other end 40b thereof protrudes into the bearing hole 130. When the plunger 40 is reciprocally moved in the axial direction within the small diameter portion 12 of the cylinder hole 10, the outer periphery of the plunger 40 slides along the inner periphery of the small diameter portion 12.

A seal groove 40c is formed along the entire circumferential periphery at the center position in the axial direction on the outer circumferential surface of the plunger 40 (see Fig. 2). An annular seal member 40d is fit into the seal groove 40c to thereby fluid-tightly seal between the outer circumferential surface of the plunger 40 and the inner circumferential surface of the small diameter portion 12.

The pump chamber 30 is defined within the cylinder hole 10 by the inner circumferential surface of the large diameter portion 11 of the cylinder hole 10, the outer surface of the one end 40a of the plunger 40 protruded within the large diameter portion 11 of the cylinder hole 10, and the surface of the lid member 20.

The end surface on the other end 40b side of the plunger 40 abuts against the cam surface 141 of the eccentric cam 140. Since the eccentric cam 140 rotates in an eccentric manner around the output shaft of the electric motor (not shown), when output shaft (not shown) of the electric motor is rotated, the plunger 40 is pushed by the cam surface 141 of the eccentric cam 140 and moves in the axial direction toward the pump chamber 30 side.

A receiving portion 41 for receiving the other end of the coil spring 50 described later is formed at the end surface on the one end 40a side of the plunger 40. The receiving portion 41 includes an annular receiving surface 41a provided at the end surface of the plunger 40 and a projection portion 41b protrusively provided at the center portion of the end surface of the plunger 40.

The coil spring 50 is disposed within the pump chamber 30 in a compressed state in a manner that the one end 51 abuts against the surface (spherical surface) of the lid member 20 and the other end 52 engages with the receiving portion 41 provided at the one end 40a of the plunger 40.

A part of the surface of the lid member 20 enters into the opening portion of the one end 51 of the coil spring 50, whereby the one end of the coil spring 50 is guided by the surface (spherical surface) of the lid member 20. Thus, since the shaft center of the coil spring 50 and the center of the lid member 20 are adjusted, so that the coil spring 50 and the lid member 20 are coaxially disposed.

The other end 52 of the coil spring 50 abuts against the receiving surface 41a in a state that the projection portion 41b of the receiving portion 41 of the plunger 40 is fit into the opening portion of the other end, and hence the coil spring 50 and the plunger 40 are coaxially disposed.

In this manner, according to the plunger pump 1 of this embodiment, the one end 51 of the coil spring 50 is received by the spherical surface or the lid member 20 and the other end 52 of the coil spring 50 is received by the receiving portion 41 provided at the one end 40a of the plunger 40.

Since the coil spring 50 presses the plunger 40 toward the eccentric cam 140 side, when the cam surface 141 of the eccentric cam 140 deviates toward a direction separating from the plunger 40 after the plunger 40 is pushed by the eccentric cam 140 and moves to the pump chamber 30 side, the coil spring moves the plunger 40 toward the eccentric cam 140 side. That is, the plunger 40 moves in the axial direction toward the eccentric cam 140 side by the pressing force from the coil spring 50. As a result, the end surface on the other end 40b side of the plunger 40 is kept in an abutted state against the cam surface 141.

The suction port 110 and the ejection port 120 opened at the pump chamber 30 are formed at the inner circumferential surface of the large diameter portion 11 of the cylinder hole 10.

The suction port 110 communicates with a suction fluid passage 110A formed within the pump body 100. The brake fluid is sucked into the pump chamber 30 from the suction fluid passage 110A via the suction port 110.

The ejection port 120 communicates with an ejection fluid passage 120A formed within the pump body 100. The brake fluid within the pump chamber 30 is ejected to the ejection fluid passage 120A via the ejection port 120.

The suction fluid passage 110A is provided with a suction valve 60 acting as a stop valve for allowing the brake fluid only to flow into the pump chamber 30.

The suction valve 60 includes a cylindrical member 64 through which a suction hole 65 penetrates, a suction valve body 61 for sealing the opening portion on the pump chamber 30 side of the suction hole 65, a retainer 62 for housing the suction valve body 61 and a spring member 63 housed within the retainer 62.

The cylindrical member 64 is a cylindrical metal component and is fit within the suction fluid passage 110A. A valve seat which diameter is enlarged in a funnel shape is formed at the opening edge potion on the pump chamber 30 side of the suction hole 65 which is formed at the center portion of the cylindrical member 64. The suction valve body 61 is a metal component of a spherical shape. The suction valve body seals the opening portion of the suction hole 65 when abutted against the valve seat of the suction hole 65.

The retainer 62 is a cylindrical lid member having a bottom portion. The end portion on the pump chamber 30 side of the suction hole 65 is fit into the opening portion of the retainer 62. The suction valve body 61 is housed within the retainer 62. A plurality of communicating holes are formed in the retainer 62 to thereby communicate the retainer 62 with the suction fluid passage 110A.

The spring member 63 is a coil spring disposed in a compressed state between the inner surface of the bottom portion of the retainer 62 and the suction valve body 61. The spring member presses the suction valve body 61 to the suction hole 65 side.

When a value obtained by subtracting the brake fluid pressure on the upstream side (pump chamber 30 side) of the suction fluid passage 110A from the brake fluid pressure on the downstream side thereof becomes equal to or larger than a valve opening pressure (a biasing force of the spring member 63), the suction valve body 61 separates from the suction hole 65 of the cylindrical member 64 against the biasing force of the spring member 63 to thereby open the suction valve 60.

The ejection fluid passage 120A is provided with an ejection valve 70 acting as a stop valve for allowing the brake fluid only to flow out from the pump chamber 30.

The ejection valve 70 includes a cylindrical member 74 trough which an ejection hole 75 penetrates, an ejection valve body 71 for sealing the opening portion on the pump chamber 30 side of the ejection hole 75, a retainer 72 for housing the ejection valve body 71 and a spring member 73 housed within the retainer 72.

The ejection valve 70 is the stop valve having the same structure as the suction valve 60. When a value obtained by subtracting the brake fluid pressure on the down stream side of the ejection fluid passage 120A from the brake fluid pressure on the upstream side (pump chamber 30 side) thereof becomes equal to or larger than a valve opening pressure (a biasing force of the spring member 73), the ejection valve body 71 separates from the ejection hole 75 of the cylindrical member 74 against the biasing force of the spring member 73 to thereby open the ejection valve 70.

Next, the explanation will be made as to the operation of the plunger pump 1 according to the embodiment.

As shown in Fig. 1, in a state that the brake fluid is filled within the pump chamber 30, when the plunger 40 is pushed by the cam surface 141 of the eccentric cam 140 being rotated and hence moves forwardly in the axial direction toward the one end side (lid member 20 side), the capacity of the pump chamber 30 reduces and so the fluid pressure of the brake fluid within the pump chamber 30 increases. Thus, since the ejection valve 70 is opened, the brake fluid within the pump chamber 30 is ejected to the ejection fluid passage 120A via the ejection port 120.

Succeedingly, after the plunger 40 reaches the end point (top dead center) of the one end side and the capacity of the pump chamber 30 becomes the minimum, the cam surface 141 of the eccentric cam 140 being rotated deviates toward a direction separating from the plunger 40. In this case, the plunger 40 moves backwardly in the axial direction toward the eccentric cam 140 side by the pressing force from the coil spring 50 to thereby increase the capacity of the pump chamber 30.

When the capacity of the pump chamber 30 increases, the pump chamber 30 is placed in a negative pressure state. Thus, the suction valve 60 is opened, whereby the brake fluid is sucked into the pump chamber 30 from the suction fluid passage 110A via the suction port 110.

Then, after the plunger 40 moves backwardly to thereby reach the end point (bottom dead center) of the other end side and the capacity of the pump chamber 30 becomes the maximum, the plunger 40 is pushed by the cam surface 141 of the eccentric cam 140 being rotated and hence moves again forwardly. Then, like the case of the aforesaid forward movement, the brake fluid within the pump chamber 30 is increased in its pressure and so ejected to the ejection fluid passage 120A.

According to the plunger pump 1 configured in the aforesaid manner, as shown in Fig.1, since the one end of the coil spring is received by the surface (spherical surface) of the lid member 20 as a sphere, the shaft center of the coil spring 50 and the center of the lid member 20 are automatically adjusted so as to be aligned and so the coil spring 50 is disposed at the center portion of the pump chamber 30. Thus, the extensible coil spring 50 can be guided while the coil spring 50 is prevented from being rubbed against the inner circumferential surface of the pump chamber 30, and so swarf can be prevented from being generated within the pump chamber 30.

Further, since the lid member 20 is configured in a simple shape, that is, a sphere, the assembling method of the lid member to the cylinder hole 10 is not limited. Thus, the assembling property of the lid member to the cylinder hole 10 can be improved.

Furthermore, the lid member 20 is pressed into the cylinder hole 10, and the retaining portion 11a for the lid member 20 is formed on the one end side of the cylinder hole 10 with respect to the center of the lid member 20. Thus, since the lid member 20 as the sphere can be surely fixed with respect to the cylinder hole 10, the one end of the cylinder hole 10 can be sealed.

Furthermore, since the receiving portion 41 of the plunger 40 receives the other end of the coil spring 50, the both ends of the coil spring 50 can be disposed at the center portion of the pump chamber 30. Thus, the coil spring 50 can be surely prevented from being rubbed against the inner circumferential surface of the pump chamber 30.

Although the embodiment according to the invention is explained above, the invention is not limited to the aforesaid embodiment and may be suitably changed in a range not departing from the gist thereof.

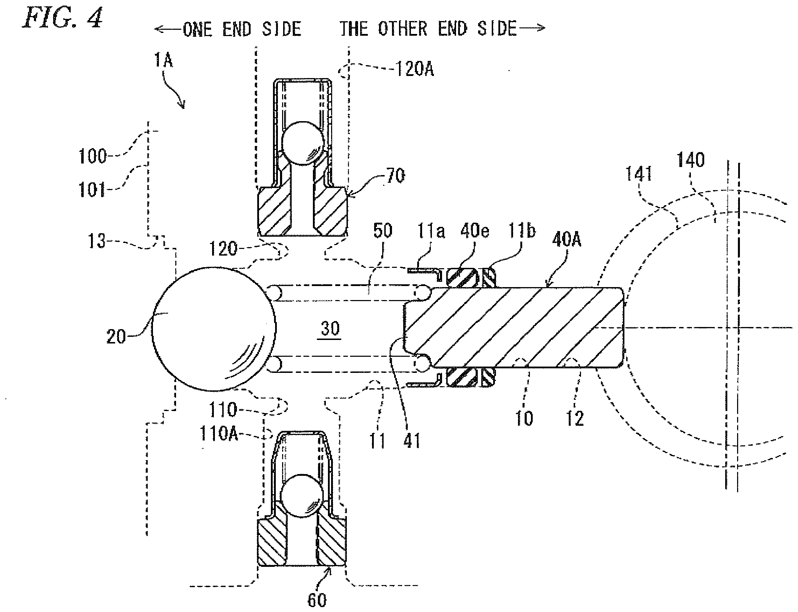

For example, in the aforesaid embodiment, as shown in Fig. 1, the seal member 40d is fit into the seal groove 40c formed on the outer circumferential surface of the plunger 40. However, like a plunger pump 1A shown in Fig. 4, without forming a seal groove on the outer circumferential surface of a plunger 40A, an annular seal member 40e may be fit on the outer circumferential surface of the plunger 40A. According to this configuration, the seal member 40e is disposed between two annular stoppers 11a and 11b which are fit in the large diameter portion 11 of the cylinder hole 10 to thereby position the seal member 40e by the stoppers 11a, 11b.

In this manner, since the seal member 40e is fit on the outer circumferential surface of the plunger 40A, the length of the plunger 40A in the axial direction can be made short and hence the plunger pump 1A can be made small in its size.

Further, like a plunger pump 1B shown in Fig, 5, a seal member 40e may be fit on the outer circumferential surface of a plunger 40B and a receiving portion 42 may be formed separately from the plunger 40B. The receiving portion 42 is formed in a cylindrical shape having a bottom portion and configured in a manner that the bottom portion thereof is provided with a projection portion 42a which is to be inserted into the opening portion on the other end 52 side of the coil spring 50 and the opening portion of the receiving portion 42 is fit on the one end 40a of the plunger 40B. That is, the receiving portion 42 covers the one end 40a of the plunger 40B.

According to this configuration, the shape of the one end 40a side of the plunger 40B is same as that of the other end 40b side thereof. Thus, at the time of assembling the plunger 40B to the cylinder hole 10, since the assembling direction of the plunger to the cylinder hole 10 is not limited, the assembling property to the cylinder hole 10 can be improved.

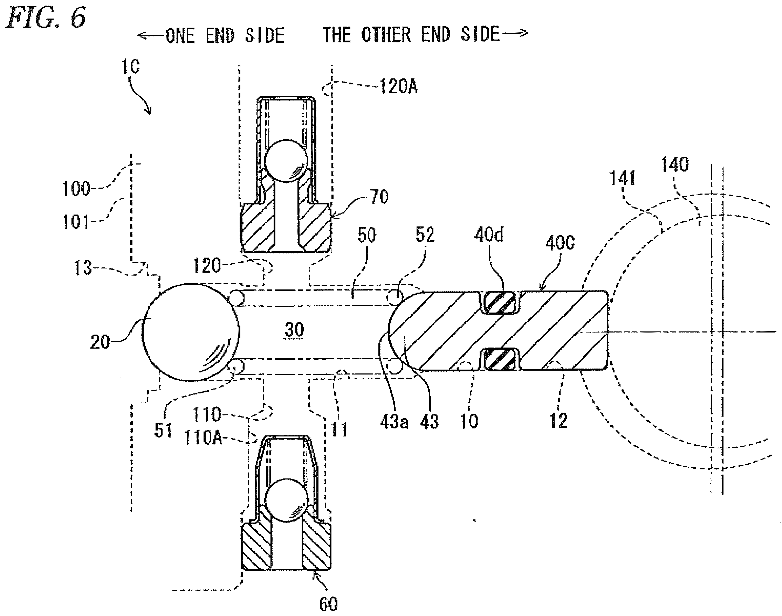

Further, like a plunger pump 1C shown in Fig. 6, in the case where the receiving portion 43 of a plunger 40C has a spherical surface 43a, when the other end 52 of the coil spring 50 is received by the spherical surface 43a, the shaft center of the coil spring 50 and the center of the spherical surface 43a of the receiving portion 43 are automatically adjusted so as to be aligned and so the other end 52 of the coil spring 50 is disposed at the center portion of the pump chamber 30.

According to this configuration, since the both ends 51, 52 of the coil spring 50 are disposed at the center position of the pump chamber 30, the extensible coil spring 50 can be surely prevented from being rubbed against the inner circumferential surface of the pump chamber 30. Further, the receiving portion 43 of the plunger 40C can be processed easily.

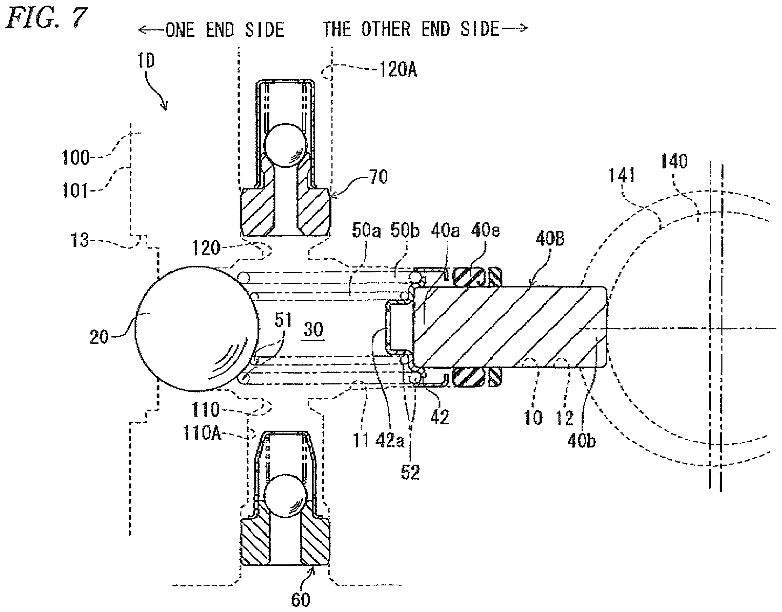

Further, like a plunger pump 1D shown in Fig. 7, two coil springs 50a, 50b may be disposed within the pump chamber 30.

According to this plunger pump 1D, the two coil springs 50a, 50b are disposed in the radial direction in a manner that the other coil spring 50a is inserted into the one coil spring 50b, whereby the one ends 51, 51 of the coil springs 50a, 50b are received by the surface of the lid member 20.

According to this configuration, since the one ends 51, 51 of the coil springs 50a, 50b are received by the surface (spherical surface) of the lid member 20, the shaft centers of the coil springs 50a, 50b and the center of the lid member 20 are automatically adjusted so as to be aligned and so the coil springs 50a, 50b are disposed at the center portion of the pump chamber 30.

Further, since the pressing force for pressing the plunger 40B to the eccentric cam 140 side is shared by the coil springs 50a, 50b, the length and the diameter of each of the coil springs 50a, 50b can be made small, so that the plunger pump 1D can be miniaturized.

Furthermore, since the length and the diameter of each of the coil springs 50a, 50b can be made small, the capacity within the pump chamber 30 can be reduced, whereby the ejection efficiency of the plunger pump 1D can be enhanced.

Although the plunger pump 1D shown in Fig. 7 employs the two coil springs 50a, 50b, the three ormore coil springs may be employed.

Further, according to the plunger pump 1D shown in Fig. 7, although the seal member 40e is fit on the outer circumferential surface of the plunger 40B and the receiving portion 42 for receiving the other ends 52, 52 of the coil springs 50a, 50b is formed separately from the plunger 40B, the configurations of the seal member and the receiving portion are not limited thereto. For example, the invention may employ such configurations that the seal member 40e is fit into the seal groove of the plunger 40B and that a receiving portion is formed at the one end 40a of the plunger 40B.

## Claims

1. A plunger pump (1, 1A - 1D) comprising:
a pump body (100) having a cylinder hole (10);
a lid member (20) configured to seal one end of the cylinder hole (10);
a plunger (40, 40A - D) which is slidably attached within the cylinder hole (10), one end of the plunger (40, 40A - D) defining a pump chamber (30) between the one end and the lid member (20) and the other end of the plunger (40, 40A - D) abutting against a driving member (140); and
a coil spring (50) which is disposed within the pump chamber (30) and presses the plunger (40, 40A - D) toward the driving member side, wherein:
when the plunger (40, 40A - D) reciprocally moves in an axial direction within the cylinder hole (10), fluid sucked into the pump chamber (30) from a suction port (110) is ejected from an ejection port (120) of the pump chamber (30); and
the lid member (20) has a spherical shape and one end (51) of the coil spring (50) is received by a surface of the lid member (20),
**characterized in that**
the one end (51) of the coil spring (50) is guided by the surface of the lid member (20) so that a shaft center of the coil spring (50) and a center of the lid member (20) are adjusted so as to be aligned.

2. The plunger pump according to claim 1, wherein:
the lid member is pressed into the cylinder hole;
a retaining portion (11a) for the lid member (20) is formed at one end of the cylinder hole; and
the retaining portion being formed by a plastically deformed portion of an inner circumferential surface of the cylinder hole (10).

3. The plunger pump according to claim 1 or 2, wherein:
the plunger (40, 40A/B) is provided with a receiving portion (41) configured to receive the other end (52) of the coil spring (50); and
the receiving portion (41) has a receiving surface (41a) where the other end (52) of the coil spring (50) abuts and a projection portion (41b) which is inserted into an opening portion at the other end (52) of the coil spring (50).

4. The plunger pump according to claim 1 or 2, wherein:
the plunger (40C) is provided with a receiving portion (43) configured to receive the other end (52) of the coil spring (50); and
the receiving portion (43) has a spherical surface (43a) where the other end (52) of the coil spring (50) abuts.

5. The plunger pump (1D) according to claim 1, comprising:
a plurality of coil springs (50a, 50b) arranged in a radial direction within the pump chamber (30), the plurality of the coil springs (50a, 50b) pressing the plunger (40D) toward the driving member side, wherein:
one end (51) of each of the plurality of the coil springs (50a, 50b) is received by a surface of the lid member (20).

## Patentansprüche

1. Kolbenpumpe (1, 1A - 1D), umfassend:
einen Pumpenkörper (100), der ein Zylinderloch (10) aufweist;
ein Deckelglied (20), das eingerichtet ist, um ein Ende des Zylinderlochs (10) abzudichten;
einen Kolben (40, 40A - D), der verschiebbar innerhalb des Zylinderlochs (10) befestigt ist, wobei ein Ende des Kolbens (40, 40A - D) eine Pumpenkammer (30) zwischen dem einen Ende und dem Deckelglied (20) definiert, und das andere Ende des Kolbens (40, 40A-D) gegen ein Antriebsglied (140) angrenzt; und
eine Spiralfeder (50), die innerhalb der Pumpenkammer (30) angeordnet ist und den Kolben (40, 40A - D) hin zu der Seite des Antriebsglieds drückt, wobei:
wenn der Kolben (40, 40A - D) sich in einer axialen Richtung innerhalb des Zylinderlochs (10) reziprok bewegt, durch einen Ansauganschluss (110) in die Pumpenkammer (30) hinein gesaugtes Fluid aus einem Ausstoßanschluss (120) der Pumpenkammer (30) ausgestoßen wird; und
das Deckelglied (20) eine sphärische Form aufweist und ein Ende (51) der Spiralfeder (50) von einer Fläche des Deckelglieds (20) aufgenommen ist,
**dadurch gekennzeichnet, dass**
das eine Ende (51) der Spiralfeder (50) von der Fläche des Deckelglieds (20) derart geführt wird, dass eine Schaftmitte der Spiralfeder (50) und eine Mitte des Deckelglieds (20) derart angepasst werden, dass sie ausgerichtet sind.

2. Kolbenpumpe nach Anspruch 1, wobei:
das Deckelglied in das Zylinderloch hineingepresst ist;
ein Rückhaltebereich (11a) für das Deckelglied (20) an einem Ende des Zylinderlochs gebildet ist; und
der Rückhaltebereich durch einen plastisch verformten Bereich einer inneren umlaufenden Fläche des Zylinderlochs (10) gebildet ist.

3. Kolbenpumpe nach Anspruch 1 oder 2, wobei:
der Kolben (40, 40A/B) mit einem Aufnahmebereich (41) versehen ist, der eingerichtet ist, um das andere Ende (52) der Spiralfeder (50) aufzunehmen; und
der Aufnahmebereich (41) eine Aufnahmefläche (41a), an die das andere Ende (52) der Spiralfeder (50) angrenzt, und einen hervorstehenden Bereich (41b), der in einen Öffnungsbereich an dem anderen Ende (52) der Spiralfeder (50) eingesetzt ist, aufweist.

4. Kolbenpumpe nach Anspruch 1 oder 2, wobei:
der Kolben (40C) mit einem Aufnahmebereich (43) versehen ist, der eingerichtet ist, um das andere Ende (52) der Spiralfeder (50) aufzunehmen; und
der Aufnahmebereich (43) eine sphärische Fläche (43a) aufweist, an die das andere Ende (52) der Spiralfeder (50) angrenzt.

5. Kolbenpumpe (1D) nach Anspruch 1, umfassend:
eine Vielzahl von Spiralfedern (50a, 50b), die in einer radialen Richtung innerhalb der Pumpenkammer (30) angeordnet ist, wobei die Vielzahl der Spiralfedern (50a, 50b) den Kolben (40D) hin zu der Seite des Antriebsglieds drückt, wobei:
ein Ende (51) von jeder der Vielzahl von Spiralfedern (50a, 50b) von einer Fläche des Deckelglieds (20) aufgenommen ist.

## Revendications

1. Pompe à piston (1, 1A-1D) comprenant :
un corps de pompe (100) ayant un trou cylindrique (10) ;
un élément formant couvercle (20) configuré pour rendre étanche une extrémité particulière du trou cylindrique (10) ;
un piston (40, 40A-D) qui est attaché de manière coulissante à l'intérieur du trou cylindrique (10), une extrémité du piston (40, 40A-D) définissant une chambre de pompe (30) entre l'extrémité particulière et l'élément formant couvercle (20) et l'autre extrémité du piston (40, 40A-D) venant en butée contre un élément d'entraînement (140) ; et
un ressort hélicoïdal (50) qui est disposé à l'intérieur de la chambre de pompe (30) et presse le piston (40, 40A-D) vers le côté élément d'entraînement, dans laquelle :
quand le piston (40, 40A-D) se déplace en va-et-vient dans une direction axiale à l'intérieur du trou cylindrique (10), un fluide aspiré dans la chambre de pompe (30) depuis un orifice d'aspiration (110) est éjecté depuis un orifice d'éjection (120) de la chambre de pompe (30) ; et
l'élément formant couvercle (20) a une forme sphérique et une extrémité particulière (51) du ressort hélicoïdal (50) est reçue par une surface de l'élément formant couvercle (20),
**caractérisée en ce que**
l'extrémité particulière (51) du ressort hélicoïdal (50) est guidée par la surface de l'élément formant couvercle (20) de telle sorte qu'un centre d'arbre du ressort hélicoïdal (50) et un centre de l'élément formant couvercle (20) sont ajustés de manière à être alignés.

2. Pompe à piston selon la revendication 1, dans laquelle :
l'élément formant couvercle est pressé dans le trou cylindrique ;
une portion de retenue (11a) pour l'élément formant couvercle (20) est formée au niveau d'une extrémité particulière du trou cylindrique ; et
la portion de retenue étant formée par une portion déformée de façon plastique d'une surface circonférentielle intérieure du trou cylindrique (10).

3. Pompe à piston selon la revendication 1 ou 2, dans laquelle :
le piston (40, 40A/B) est pourvu d'une portion de réception (41) configurée pour recevoir l'autre extrémité (52) du ressort hélicoïdal (50) ; et
la portion de réception (41) présente une surface de réception (41a) où l'autre extrémité (52) du ressort hélicoïdal (50) vient en butée et une portion de projection (41b) qui est insérée dans une portion d'ouverture au niveau de l'autre extrémité (52) du ressort hélicoïdal (50).

4. Pompe à piston selon la revendication 1 ou 2, dans laquelle :
le piston (40C) est pourvu d'une portion de réception (43) configurée pour recevoir l'autre extrémité (52) du ressort hélicoïdal (50) ; et
la portion de réception (43) présente une surface sphérique (43a) où l'autre extrémité (52) du ressort hélicoïdal (50) vient en butée.

5. Pompe à piston (1D) selon la revendication 1, comprenant :
une pluralité de ressorts hélicoïdaux (50a, 50b) agencés dans une direction radiale à l'intérieur de la chambre de pompe (30), la pluralité des ressorts hélicoïdaux (50a, 50b) pressant le piston (40D) vers le côté élément d'entraînement, dans laquelle :
une extrémité particulière (51) de chacun de la pluralité des ressorts hélicoïdaux (50a, 50b) est reçue par une surface de l'élément formant couvercle (20).
